# FASCICULE DE BREVET EUROPEEN

(11) **EP 4 367 194 B1**
(45) Date de publication et mention de la délivrance du brevet: **19.03.2025**
(21) Numéro de dépôt: 22753726.3
(22) Date de dépôt: 06.07.2022
(51) Int. Cl.: C09J 201/10, C09J 7/38, C08G 65/336, C08K 9/06, C09J 171/02, C09J 175/08

(54) **NOUVELLE COMPOSITION RETICULABLE DE POLYMERE A TERMINAISON SILYL ET ARTICLE AUTO-ADHESIF CORRESPONDANT**
NEUE VERNETZBARE ZUSAMMENSETZUNG MIT SILYLTERMINIERTEM POLYMER UND ZUGEHÖRIGER SELBSTKLEBENDER ARTIKEL
NOVEL CROSSLINKABLE COMPOSITION WITH A SILYL TERMINATED POLYMER, AND CORRESPONDING SELF-ADHESIVE ARTICLE

(30) Priorité: 08.07.2021 FR 2107428
(43) Date de publication de la demande: 15.05.2024
(73) Titulaire: Bostik SA, 92700 Colombes (FR)
(72) Inventeur: MAMERI, Foudil, 60280 VENETTE (FR); LALOUCH, Lahoussaine, 60280 VENETTE (FR); BORDAT, Jean-Marie, 60280 VENETTE (FR)
(74) Mandataire: Arkema Patent
(86) Numéro de dépôt international: PCT/FR2022/051353
(87) Numéro de publication internationale: WO 2023/281215

(56) Documents cités:
- EP-A1- 1 095 981
- EP-A1- 2 615 147
- EP-A2- 0 336 431
- WO-A1-2015/195391
- WO-A1-2020/128200
- JP-A- 2014 001 319
- JP-A- 2019 147 925

## Description

### DOMAINE DE L'INVENTION

La présente invention a pour objet un article auto-adhésif, notamment un support auto-adhésif qui comprend une couche support revêtue d'une couche auto-adhésive constituée d'une composition adhésive réticulable, à l'état réticulé. Elle concerne enfin un procédé de fabrication dudit article.

### ARRIERE PLAN TECHNIQUE

Les adhésifs sensibles à la pression (également dénommés colles auto-adhésives ou encore, en anglais, "Pressure Sensitive Adhesives" ou PSA) sont des substances qui confèrent à la couche support qui en est revêtue un pouvoir collant immédiat à température ambiante. Souvent désigné par le terme anglais de "tack" ou encore parfois par le terme de "pégosité", ce pouvoir collant immédiat permet l'adhésion instantanée dudit support auto-adhésif à toutes sortes de substrats, sous l'effet d'une pression légère et brève.

En raison de son pouvoir adhésif, habituellement évalué par un test de pelage (ou peel, en anglais), ledit support auto-adhésif est alors fermement fixé audit substrat, au moyen d'un joint adhésif.

Les PSA sont largement utilisés pour la fabrication d'articles auto-adhésifs, tels que par exemple d'étiquettes auto-adhésives qui sont fixées sur des articles à des fins de présentation d'informations (telles que code barre, dénomination, prix) et/ou à des fins décoratives, que ce soit lors de collages permanents ou temporaires.

Les PSA sont également mis en œuvre pour la fabrication de rubans auto-adhésifs d'utilisations variées. On peut citer par exemple, outre le ruban adhésif transparent largement utilisé dans la vie quotidienne : la mise en forme et l'assemblage d'emballages en carton ; la protection de surfaces pour les travaux de peinture, dans la construction ; la fixation et le maintien d'éléments divers tels que panneaux, briques, objets protubérants, dans la construction de bâtiments ou d'édifices ; la fixation et le maintien de parties métalliques ou plastiques ou en verre, plates ou ayant des profils spécifiques, tels des câbles électriques, des films plastiques, des vitres, des tôles, des inscriptions, des logos, des parties de sièges, des tableaux de bord, des parois plastiques ou textiles, des conduits ou des tuyaux de circulation de fluides, notamment dans l'industrie des transports ; le collage des moquettes par rubans adhésifs à double face dans le domaine du bâtiment.

En vue de la fabrication d'articles auto-adhésifs (par exemple d'étiquettes et/ou rubans auto-adhésifs), les PSA sont généralement appliqués par des procédés d'enduction en continu sur la totalité de la surface d'une couche support (le cas échéant imprimable) de grandes dimensions, à raison d'une quantité (généralement exprimée en g/m²) et désignée ci-après par le terme de "grammage". La couche support est par exemple du papier ou un film constitué d'un matériau polymère à une ou plusieurs couches. La couche de composition auto-adhésive qui recouvre la couche support peut être elle-même recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur l'article à revêtir soit manuellement, soit à l'aide d'étiqueteuses sur des chaînes automatisées de conditionnement.

Ces systèmes multicouches peuvent être également transformés en rubans auto-adhésifs par découpe et conditionnement en rouleaux de largeurs et de longueurs déterminées avec au besoin la découpe ou pré-découpe de formes particulières utiles à leur utilisation finale, comme par exemple pour l'assemblage de pièces de taille variable et de forme variable, dans l'industrie de l'électronique, que ce soit pour des applications dans l'industrie ou par le grand public.

Les PSA permettent, en raison de leur tack élevé à température ambiante, une prise ou accroche rapide de l'étiquette et/ou du ruban auto-adhésifs sur le substrat (ou article) à revêtir (par exemple, s'agissant d'étiquettes, sur des bouteilles ou bien, s'agissant de rubans, sur des cartons d'emballage à mettre en forme), propre à l'obtention de cadences de production industrielle importantes.

Il existe un domaine d'application des PSA pour lequel il est souhaitable que le pouvoir adhésif des étiquettes et/ou rubans sur le substrat soit également maintenu lorsque le joint de colle assurant la fixation est exposé (de même, par conséquent, que l'article revêtu de l'étiquette et/ou du ruban) à une température susceptible de varier dans un large domaine. On peut citer à titre d'exemple la pose d'étiquettes sur certains organes des automobiles (ou autres véhicules) situés à proximité du moteur, ou sur des emballages conçus pour recevoir durant leur conditionnement un liquide chaud, ou encore sur des articles (tels les pneumatiques) qui sont étiquetés à chaud, au sortir des chaînes de fabrication. On peut également citer la mise en œuvre de rubans auto-adhésifs pour l'assemblage de pièces pour lesquelles une bonne tenue thermique est nécessaire comme dans le cas, par exemple, de l'habillage intérieur des avions ou autres véhicules.

Des PSA souvent utilisés pour ce domaine d'application comprennent des polymères (ou copolymères) de type acrylate de masse moléculaire moyenne en nombre (Mn) très élevée. Ces derniers se présentent sous la forme soit d'émulsion aqueuse soit de solution organique. Toutefois, l'enduction de tels PSA sur une couche support est compliquée, au plan industriel, par le fait qu'il est nécessaire de prévoir soit une étape supplémentaire de séchage de l'émulsion, soit des installations particulières prenant en compte les problèmes d'hygiène et de sécurité industrielles liés à l'évaporation du solvant organique. Dans les 2 cas, les inconvénients liés à l'odeur désagréable des acryliques doivent également être pris en compte.

Le brevet US 6486229 décrit une composition adhésive thermofusible réticulable aux UV comprenant une résine tackifiante, un photoinitiateur et un copolymère multibloc radial styrène-butadiène, dont le bloc butadiène a une teneur élevée en groupe vinyl pendant. Cette composition est enduite à l'état non réticulé sur une couche support, puis réticulée par exposition à un rayonnement ultra-violet. Le support auto-adhésif ainsi obtenu convient particulièrement pour les applications des rubans et étiquettes pour lesquelles une bonne cohésion à température élevée est requise. La demande internationale WO 2004/011559 décrit une composition acrylique susceptible d'être enduite comprenant un copolymère acrylique, un photoinitiateur et un (méth)acrylate multifonctionnel. Cette composition peut également être réticulée par exposition à un rayonnement ultra-violet pour donner un PSA à haute performance.

Ces techniques d'obtention de PSA par UV présentent toutefois des inconvénients qui découlent des problèmes d'hygiène industrielle liés aux lampes UV et des coûts associés à la faible durée de vie de celles-ci. De plus, dans le cas de supports auto-adhésifs à fort grammage en PSA, par exemple un grammage supérieur à 150 g/m², il est difficile d'assurer le maintien du pouvoir adhésif dans un large domaine de température, et notamment à température élevée, en raison de la difficulté de pénétration du rayonnement UV sur la totalité de l'épaisseur de la couche adhésive réticulable. Enfin, un autre inconvénient de la réticulation par exposition aux UV est que la réticulation s'arrête dès que la composition n'est plus exposée aux radiations UV ; ainsi, la réaction de réticulation ne peut pas se poursuivre et se terminer après que la couche support enduite est sortie de la ligne de production, par exemple durant le stockage.

On connaît déjà, notamment par les trois demandes de Bostik SA : WO 09/106699, EP2336208 et WO 2020/128200, des compositions adhésives à base de polyuréthane (ou polyéther) à terminaison alkoxysilanes qui sont réticulables par chauffage. Ces compositions adhésives sont avantageusement exemptes de solvant et d'eau. Leur enduction sur un support et leur chauffage, à une température comprise entre 50 et 150°C, conduit, au terme d'une réaction chimique de réticulation également mise en œuvre en présence d'humidité, à l'obtention d'un support auto-adhésif qui présente les propriétés requises de pouvoir adhésif (ou peel) et de tack. Cette réaction de réticulation conduit à la formation d'un joint adhésif qui possède une structure de réseau polymérique tridimensionnel comprenant des liaisons siloxane et qui assure la fixation du support auto-adhésif sur le substrat. Ledit support auto-adhésif peut ainsi être utilisé pour la fabrication d'étiquettes et/ou de rubans auto-adhésifs.

La demande WO 12/090151 de Bostik SA décrit une méthode de réticulation d'une composition adhésive à base de polyuréthane (ou polyéther) à terminaison alkoxysilanes, qui met en œuvre un moyen de guidage de type Caroll dans une chambre climatique dont la température est comprise entre 50°C et 200°C et dont l'humidité relative est contrôlée de préférence à une valeur d'environ 50 %.

La demande FR 3013993 de Bostik SA décrit un procédé d'application d'une composition adhésive comprenant un prépolymère réactif, notamment un prépolymère à terminaison alkoxysilanes, ledit procédé comprenant le chauffage de ladite composition en ligne par alimentation électrique d'un câble inducteur, en amont de son application à chaud sur un support à l'aide d'une buse d'application et à une température comprise entre 50°C et 200°C.

JP 2019 147925 A, EP 2 615 147 A1, JP 2014 001319 A et EP 1 095 981 A1 divulguent une composition adhésive comprenant une composition de résine incluant un copolymère ayant un groupe alkoxysilane hydrolysable, une silice pyrogénée, une résine tackifiante et un catalyseur de réticulation.

WO 2015/195391 A1 divulgue une composition auto-adhésive comprenant au moins un monomère éthylénique insaturé formant un polymère ayant une température de transition vitreuse faible, et au moins un agent de réticulation à base d'un polymère silsesquioxane comprenant une pluralité de groupes éthyléniquement insaturés.

La présente invention a pour but de simplifier le procédé de fabrication d'un article auto-adhésif, notamment d'un support auto-adhésif, par réticulation d'une composition adhésive réticulable à base d'un polymère à terminaison alkoxysilane

La présente invention a également pour but de proposer une composition adhésive réticulable à base d'un polymère à terminaison alkoxysilane, qui permette de fabriquer un article auto-adhésif, notamment un support auto-adhésif, par réticulation à une température plus basse, notamment à une température inférieure à 50 °C, et même à température ambiante.

La présente invention a également pour but de proposer une composition adhésive réticulable à base d'un polymère à terminaison alkoxysilane, qui permette de fabriquer un article auto-adhésif, notamment un support auto-adhésif, par réticulation sans contrôle ou régulation de l'humidité relative.

Un autre but de la présente invention est de fournir une composition adhésive réticulable qui réticule à température et/ou humidité ambiantes en un temps réduit.

Un autre but de la présente invention est de fournir une composition adhésive réticulable qui conduise après enduction sur un support puis réticulation, à un adhésif sensible à la pression possédant des propriétés convenables de pouvoir adhésif et de tack.

Un autre but de l'invention est que le joint adhésif qui assure la fixation du support auto-adhésif ainsi obtenu sur un substrat garde la cohésion requise sur un large domaine de température, y compris pour des grammages élevés en PSA.

Un autre but de l'invention est que le joint adhésif présente une résistance mécanique améliorée.

Il a à présent été trouvé que ces buts peuvent être atteints en totalité ou en partie au moyen de la composition adhésive et du support auto-adhésif qui sont décrits ci-après.

### DESCRIPTION DE L'INVENTION

### Composition adhésive réticulable :

La présente invention a donc pour objet en premier lieu un article auto-adhésif comprenant une couche support revêtue d'une couche autoadhésive, caractérisé en ce que ladite couche auto-adhésive est constituée d'une composition adhésive réticulable, à l'état réticulé, la composition adhésive réticulable étant caractérisée en ce qu'elle comprend :
- au moins un polymère (A) comprenant un groupe alkoxysilane hydrolysable ;
- au moins une résine tackifiante (B) ;
- au moins une silice pyrogénée (C) ; et
- au moins un catalyseur de réticulation (D); et
- une résine silsesquioxane (E).

Il a à présent été trouvé que ladite composition réticulable offre un temps de réticulation considérablement réduit, à température et humidité ambiantes. Elle peut ainsi avantageusement conduire, après son enduction sur une couche support et sa réticulation, à un support auto-adhésif, au terme d'un procédé qui met en œuvre une étape de chauffage à une température plus basse et ne nécessite pas une humidité relative élevée, ou même au terme d'un procédé qui ne nécessite pas d'étape de chauffage et/ou de contrôle de l'humidité.

De plus, ledit support auto-adhésif présente également des propriétés conformes de pouvoir adhésif (ou peel) sur un substrat tel que l'acier inoxydable, qui le rendent apte à se fixer fermement sur le dit substrat. Le joint adhésif qui assure la fixation dudit support sur le substrat garde, de manière tout à fait surprenante, une bien meilleure cohésion en température, grâce à une résistance améliorée aux essais de cisaillement à température constante à 125°C.

Enfin la couche auto-adhésive constituée de la composition adhésive réticulable à l'état réticulé est avantageusement dotée d'une plus grande résistance mécanique, quantifiée par mesure de la contrainte à la rupture.

### Polymère (A) :

Au sens de la présente invention, on entend par polymère (A) comprenant un groupement alkoxysilane hydrolysable, un polymère qui comprend au moins un, et de préférence au moins deux, groupements hydrolysables de formule (I) :

-Si(R⁴)ₚ(OR⁵)₃₋ₚ (I)

dans laquelle :
- R⁴ représente un radical alkyl linéaire ou ramifié comprenant de 1 à 4 atomes de carbone, avec la possibilité que quand il y a plusieurs radicaux R⁴, ces derniers soient identiques ou différents ;
- R⁵ représente un radical alkyl linéaire ou ramifié comprenant de 1 à 4 atomes de carbone, avec la possibilité que quand il y a plusieurs radicaux R⁵, ces derniers soient identiques ou différents, avec la possibilité que deux groupements OR⁵ puissent être engagés dans un même cycle ; et
- p est un nombre entier égal à 0, 1 ou 2, de préférence égal à 0 ou 1.

Le groupement alkoxysilane hydrolysable est de préférence positionné en terminaison dudit polymère. Un positionnement en milieu de chaîne n'est toutefois pas exclu. Le polymère (A) n'est pas réticulé avant l'application de la composition adhésive. La composition adhésive est appliquée dans des conditions permettant sa réticulation.

Le polymère (A) est donc un polymère silylé qui se présente généralement sous forme de liquide plus ou moins visqueux. De préférence, le polymère (A) présente une viscosité, en particulier à 23°C, allant de 10 à 200 Pa.s, de préférence allant de 20 à 175 Pa.s, ladite viscosité étant par exemple mesurée selon une méthode de type Brookfield à 23°C et 50% d'humidité relative (aiguille S28).

Le polymère (A) comprend de préférence deux groupements de formule (I), mais il peut également comprendre de trois à six groupements de formule (I).

De préférence, le ou les polymères (A) présentent une masse moléculaire moyenne en nombre (Mn) allant de 500 à 50000 g/mol, de préférence encore allant de 700 à 20000 g/mol. La masse moléculaire moyenne en nombre (Mn) des polymères peut être calculée ou mesurée par des méthodes bien connues de l'homme du métier, par exemple par RMN et chromatographie d'exclusion stérique en utilisant des étalons de type polystyrène.

Selon un mode de réalisation de l'invention, le polymère (A) répond à l'une des formules (II), (III) ou (IV) : 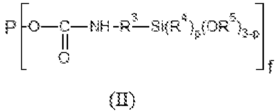 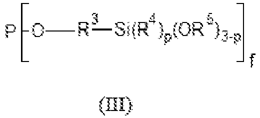 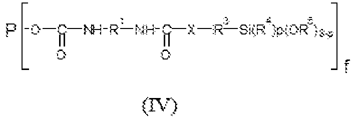 dans lesquelles :
- R⁴, R⁵ et p ont la même signification que dans la formule (I) décrite ci-dessus,
- P représente un radical polymérique saturé ou insaturé, linéaire ou ramifié comprenant éventuellement un ou plusieurs hétéroatomes, tels que oxygène, azote, soufre, silicium, et présentant de préférence une masse moléculaire moyenne en nombre (Mn) allant de 100 g/mol à 48600 g/mol, plus particulièrement de 300 g/mol à 18600 g/mol ou encore de 500 g/mol à 12600 g/mol,
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone, de préférence de 1 à 3 atomes de carbone,
- X représente un radical divalent choisi parmi -NH-, -NR⁷- ou -S-,
- R⁷ représente un radical alkyl linéaire ou ramifié comprenant de 1 à 20 atomes de carbone et pouvant également comprendre un ou plusieurs hétéroatomes, et
- f est un entier allant de 1 à 6, de préférence allant de 2 à 5, de préférence de 2 à 4, de préférence encore allant de 2 à 3.

De préférence, dans les formules (II), (III) et/ou (IV) ci-dessus, P représente un radical polymérique choisi de manière non limitative parmi les polyéthers, polycarbonates, polyesters, polyoléfines, polyacrylates, polyéther polyuréthanes, polyester polyuréthanes, polyoléfine polyuréthanes, polyacrylate polyuréthanes, polycarbonate polyuréthanes, polyéther/polyester polyuréthanes à blocs.

Par exemple, le document EP 2468783 décrit des polymères silylés de formule (II) dans lesquels P représente un radical polymérique à blocs polyuréthane/polyester/polyéther.

Selon un mode de réalisation, les polymères silylés sont choisis parmi les polyuréthanes silylés, les polyéthers silylés, et leurs mélanges.

Selon un mode de réalisation particulier, le polymère silylé (A) répond à l'une des formules (II'), (III') ou (IV') : 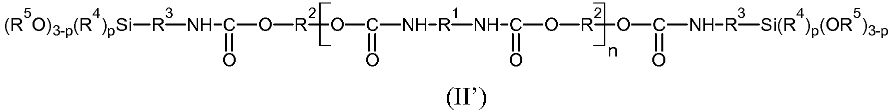 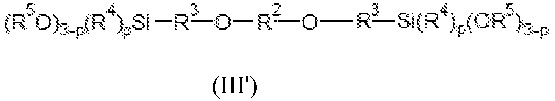 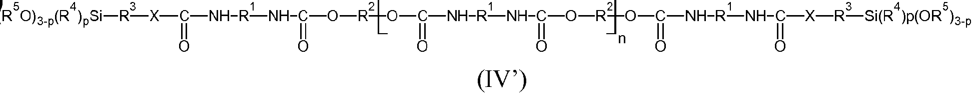 dans lesquelles :
- R¹, R³, R⁴, R⁵, X, R⁷ et p ont la même signification que dans les formules (II), (III) et (IV) décrites ci-dessus,
- R² représente un radical divalent hydrocarboné saturé ou insaturé, linéaire ou ramifié comprenant éventuellement un ou plusieurs hétéroatomes, tels que oxygène, azote, soufre, silicium, et présentant de préférence une masse moléculaire moyenne en nombre (Mn) allant de 100 g/mol à 48600 g/mol, plus particulièrement de 300 g/mol à 18600 g/mol ou encore de 500 g/mol à 12600 g/mol, et
- n est un entier supérieur ou égal à 0.

Dans les polymères silylés de formules (II'), (III') ou (IV') définies ci-dessus, lorsque le radical R² comprend un ou des hétéroatomes, ledit ou lesdits hétéroatomes ne sont pas présents en bout de chaîne. Autrement dit, les valences libres du radical divalent R² liées aux atomes d'oxygène voisin du polymère silylé, proviennent chacune d'un atome de carbone. Ainsi, la chaine principale du radical R² est terminée par un atome de carbone à chacune des deux extrémités, ledit atome de carbone présentant alors une valence libre.

Selon un mode de réalisation, les polymères silylés (A) sont obtenus à partir de polyols choisis parmi les polyéthers polyols, les polyesters polyols, les polycarbonates polyols, les polyacrylates polyols, les polysiloxanes polyols et les polyoléfines polyols et leurs mélanges, et de préférence encore à partir de diols choisis parmi les polyéthers diols, les polyesters diols, les polycarbonates diols, les polyacrylates diols, les polysiloxanes diols, les polyoléfines diols et leurs mélanges. Dans le cas des polymères de formules (II'), (III') ou (IV') décrites ci-dessus, de tels diols peuvent être représentés par la formule HO-R²-OH où R² a la même signification que dans les formules (II'), (III') ou (IV').

Par exemple, parmi les radicaux de type R² qui peuvent être présents dans les formules (II'), (III') ou (IV'), on peut citer les radicaux divalents suivants dont les formules ci-dessous font apparaître les 2 valences libres :
- dérivé d'un polypropylène glycol : 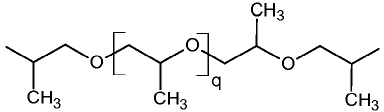
- dérivé d'un polyester diol : 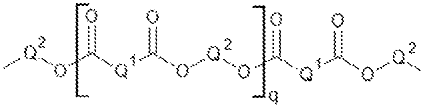
- dérivé d'un polybutadiène diol : 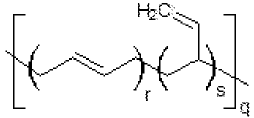
- dérivé d'un polyacrylate diol : 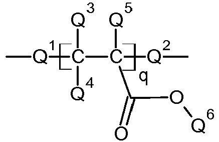
- dérivé d'un polysiloxane diol :

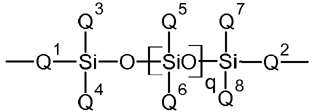

Dans les formules ci-dessus, la signification des radicaux et indices est la suivante :
- q représente un entier tel que la masse moléculaire moyenne en nombre du radical R² va de 100 g/mol à 48600 g/mol, de préférence de 300 g/mol à 18600 g/mol, de préférence encore de 500 g/mol à 12600 g/mol,
- r et s représentent zéro ou un entier non nul tel que la masse moléculaire moyenne en nombre (Mn) du radical R² va de 100 g/mol à 48600 g/mol, de préférence de 300 g/mol à 18600 g/mol, de préférence encore de 500 g/mol à 12600 g/mol, étant entendu que la somme r+s est différente de zéro,
- Q¹ représente un radical alkylène divalent aromatique ou aliphatique linéaire ou ramifié, saturé ou insaturé, présentant de préférence de 1 à 18 atomes de carbone, de préférence encore de 1 à 8 atomes de carbone,
- Q² représente un radical alkylène divalent linéaire ou ramifié présentant de préférence de 2 à 36 atomes de carbone, de préférence encore de 1 à 8 atomes de carbone,
- Q³, Q⁴, Q⁵, Q⁶, Q⁷ et Q⁸, représentent, indépendamment les uns des autres, un atome d'hydrogène ou un radical alkyle, alkényle ou aromatique, présentant de préférence de 1 à 12 atomes de carbone, de préférence de 2 à 12 atomes de carbone, de préférence encore de 2 à 8 atomes de carbone.

Selon mode de réalisation de la composition selon l'invention, le polymère silylé (A) est tel que le radical R² qui apparaît dans les formules (II'), (III') et (IV') représente un radical polyéther, de préférence un radical poly(oxyalkylène), et de manière encore plus préférée un radical dérivé d'un polypropylène glycol répondant à la formule indiquée plus haut.

Selon un mode de réalisation, R¹ est choisi parmi l'un des radicaux divalents suivants dont les formules ci-dessous font apparaître les 2 valences libres :
a) le radical divalent dérivé de l'isophorone diisocyanate (IPDI) : 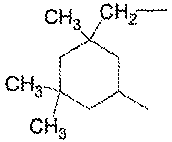
b) le radical divalent dérivé du dicyclohexylmethane diisocyanate (H12MDI) 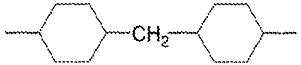
c) le radical divalent dérivé du toluène diisocyanate (TDI) 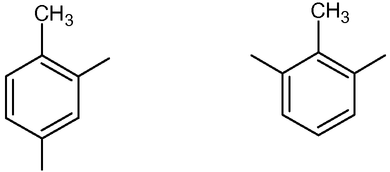
d) les radicaux divalents dérivés des isomères 4,4' et 2,4'- du diphénylmethane diisocyanate (MDI) 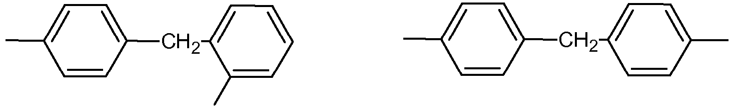
e) le radical divalent dérivé de l'hexaméthylène diisocyanate (HDI) -(CH₂)₆-
f) le radical divalent dérivé du m-xylylène diisocyanate (m-XDI)

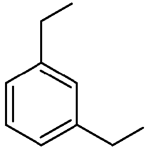

Les polymères de formule (II) ou (II') peuvent être obtenus selon un procédé décrit dans les documents EP 2336208 et WO 2009/106699. L'homme du métier saura adapter le procédé de fabrication décrit dans ces deux documents dans le cas de l'utilisation de différents types de polyols. Parmi les polymères répondant à la formule (II), on peut citer :
- GENIOSIL^{®} STP-E10 (disponible auprès de WACKER) : polyéther comprenant deux groupements (I) de type diméthoxy (n égal à 0, p égal à 1 et R⁴ et R⁵ représentent un groupement méthyle) présentant une masse moléculaire moyenne en nombre de 8889 g/mol où R³ représente un groupement méthyle;
- GENIOSIL^{®} STP-E30 (disponible auprès de WACKER) : de masse moléculaire moyenne en nombre de 14493 g/mol, il s'agit d'un polypropylène glycol avec 2 groupes terminaux constitués d'un diméthoxy(méthyl)silylméthylcarbamate, soit dans la formule (II') : n égal à 0 ; p égal à 1 ; R⁴ et R⁵ représentent un groupement méthyle et R³ représente un groupement méthyle ;
- DESMOSEAL^{®} S XP 2636 (disponible auprès de BAYER) : polyuréthane comprenant deux groupements (I) de type triméthoxy (n différent de 0, p égal à 0 et R⁵ représente un groupement méthyle) présentant une masse moléculaire moyenne en nombre de 15038 g/mol où R³ représente un groupement n-propylène.

Les polymères de formule (III) ou (III') peuvent être obtenus par hydrosilylation de polyéther diallyléther selon un procédé décrit par exemple dans le document EP 1829928. Parmi les polymères répondant à la formule (III), on peut citer :
- le polymère MS SAX^{®} 350 (disponible auprès de KANEKA) correspondant à un polyéther comprenant deux groupements (I) de type diméthoxy (p égal à 1 et R⁴ et R⁵ représentent un groupement méthyle) ayant une masse moléculaire moyenne en nombre allant de 14000 à 16000 g/mole ;
- le polymère MS SAX^{®} 260 (disponible auprès de KANEKA) correspondant à un polyéther comprenant deux groupements (I) de type diméthoxy (p égal à 1, R⁴ et R⁵ représentent un groupement méthyle) présentant une masse moléculaire moyenne en nombre de 16000 à 18000 g/mol où R³ représente un groupement éthyle ;
- le polymère MS S303H (disponible auprès de KANEKA) correspondant à un polyéther comprenant deux groupements (I) de type diméthoxy (p est égal à 1 et R⁴ représente un groupement méthyle) ayant une masse moléculaire moyenne en nombre d'environ 22 000 g/mol.

Les polymères de formule (IV) ou (IV') peuvent par exemple être obtenus par réaction de polyol(s) avec un ou des diisocyanate(s) suivie d'une réaction avec des aminosilanes ou des mercaptosilanes. Un procédé de préparation de polymères de formule (IV) ou (IV') est décrit dans le document EP 2 583 988. L'homme du métier saura adapter le procédé de fabrication décrit dans ce document dans le cas de l'utilisation de différents types de polyols. Parmi les polymères répondant à la formule (IV) ou (IV'), on peut citer :
- SPUR+^{®} 1050MM (disponible auprès de MOMENTIVE) : polyuréthane comprenant deux groupements (I) de type triméthoxy (n différent de 0, p égal à 0 et R⁵ représente un groupement méthyle) présentant une masse moléculaire moyenne en nombre de 16393 g/mol où R³ représente un groupement n-propyle ;
- SPUR+^{®} Y-19116 (disponible auprès de MOMENTIVE) : polyuréthane comprenant deux groupements (I) de type triméthoxy (n différent de 0 et R⁵ représente un groupement méthyle) présentant une masse moléculaire moyenne en nombre allant de 15000 à 17000 g/mol g/mol où R³ représente un groupement n-propyle.

Selon un mode de réalisation préféré de l'invention, la composition adhésive comprend au moins un polymère silylé (A) de formule (II) et/ou (II') ou au moins un polymère silylé (A) de formule (III) et/ou (III').

Selon un mode de réalisation tout particulièrement préféré de l'invention, le polymère (A) est un polymère silylé de formule (II') dans laquelle n égale 0, R² est un radical divalent dérivé d'un polyéther, de préférence d'un poly(oxyalkylène) diol, et encore plus particulièrement d'un polypropylène glycol.

### Résine tackifiante (B) :

La composition adhésive réticulable selon l'invention comprend également au moins une résine tackifiante (B).

Ladite résine peut être toute résine compatible avec le ou les polymère(s) silylé(s) (A).

On entend désigner par les termes "résine tackifiante compatible" une résine tackifiante qui, lorsqu'elle est mélangée dans les proportions 50%/50% (notamment en poids) avec le (ou les) polymère (A), donne un mélange substantiellement homogène.

Les résines (B) sont avantageusement choisies parmi :
- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène, ledit procédé pouvant également comprendre une réaction avec des phénols ;
- (iii) les colophanes d'origine naturelle ou modifiées, (telles que par exemple la colophane extraite de la gomme de pins, la colophane de bois extraite des racines de l'arbre et leurs dérivés hydrogénés, dimérisés, polymérisés ou estérifiés par des monoalcools ou des polyols, comme le glycérol ou le pentaérythritol) ;
- (iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) les résines terpéniques, (qui résultent généralement de la polymérisation d'hydrocarbures terpéniques - comme par exemple le mono-terpène (ou pinène)- en présence de catalyseurs de Friedel-Crafts) ;
- (vi) les copolymères à base de terpènes naturels, (tels que, par exemple, le styrène/terpène, l'alpha-méthyl styrène/terpène et le vinyl toluène/terpène) ; ou bien
- (vii) les résines acryliques ayant une viscosité à 100°C inférieure à 100 Pa.s ;
ainsi que parmi les mélanges de ces résines.

De telles résines sont disponibles commercialement et parmi celles de type (i), (ii), (iii) et (iv) définis ci-dessus, on peut citer les produits suivants :
- résines de type (i) : Dertophène^{®} 1510 disponible auprès de la société DRT possédant une masse moléculaire moyenne en nombre (Mn) d'environ 870 Da ; Dertophène^{®} H150 disponible auprès de la même société de masse moléculaire moyenne en nombre (Mn) égale à environ 630 Da ; Sylvarez^{®} TP 95 disponible auprès de la société Arizona Chemical ayant une masse moléculaire moyenne en nombre (Mn) d'environ 1200 Da ;
- résines de type (ii) : Cleartack^{®} W100 disponible auprès de la société Cray Valley , qui est obtenue par polymérisation d'alpha-méthyl styrène sans action de phénols, avec une masse moléculaire moyenne en nombre (Mn) de 900 Da ; Sylvarez^{®} 510 qui est également disponible auprès de la société Arizona Chemical avec une masse moléculaire moyenne en nombre (Mn) d'environ 1740 Da, dont le procédé d'obtention comprend également l'ajout de phénols ;
- résines de type (iii) : Sylvalite^{®} RE 100 qui est un ester de collophane et de pentaeréthritol disponible auprès de la société Arizona Chemical et de masse moléculaire moyenne en nombre (Mn) d'environ 1700 Da ;
- résines de type (iv) : Picco^{®} AR100 disponible auprès de la société Eastman et de masse moléculaire moyenne en nombre (Mn) d'environ 550 g/mole.

Selon une variante préférée, on utilise comme résine (B) une résine choisie parmi celles de type (i) ou (iv).

### Silice pyrogénée (C) :

La silice pyrogénée (également dénommé « fumed silica » en langue anglaise) se présente sous la forme de très fines particules de silice (de l'ordre du nanomètre), de très faible masse volumique apparente et de surface spécifique très élevée. La silice pyrogénée peut être obtenue par pyrolyse, en présence d'hydrogène et d'oxygène, de composés du silicium, tels que le tétrachlorure de silicium, lui-même préparé à partir de silicium et de chlore.

La silice pyrogénée est initialement hydrophile, en raison de la présence de groupes silanol (Si-OH) à la surface de ses particules constitutives. Elle peut être rendue hydrophobe par réaction de ces groupes silanols avec différents réactifs, généralement une huile de silicone, comme le PolyDiMéthylSiloxane (PDMS).

De préférence, la silice pyrogénée (C) est une silice pyrogénée hydrophobe.

Selon un mode de réalisation, la silice pyrogénée hydrophobe (C) est obtenue par traitement d'une silice pyrogénée avec un PolyDiMéthylSiloxane.

Selon un mode de réalisation, la silice pyrogénée (C) possède une surface spécifique BET d'au moins 10 m²/g, de préférence allant de 50 à 400 m²/g, de manière encore plus préférée de 80 à 290 m²/g. La surface spécifique BET est mesurée, de manière bien connue de l'homme du métier, par détermination d'un isotherme d'adsorption basée sur la méthode de Brunauer, Emmett et Teller (BET), par exemple selon la norme ISO 9277 de Septembre 2010.

Selon un autre mode de réalisation, la silice pyrogénée (C) est obtenue par un traitement de compaction, par exemple à partir d'un compacteur à rouleau ou du procédé décrit par le brevet EP 0 280 851. La masse volumique apparente est quantifiée par une mesure de la densité apparente tassée, mesurée selon la norme ISO 787/11 d'août 1983, qui est généralement comprise dans un domaine allant de 50 à 200 g/l.

De telles silices pyrogénées, notamment hydrophobes, sont disponibles commercialement, comme les produits de la gamme AEROSIL^{®} de la société EVONIK.

On peut notamment citer comme exemple de silice pyrogénée hydrophobe (C) l'AEROSIL^{®} R202 dont la surface spécifique BET est de 100±20 m²/g, la densité apparente tassée d'environ 60 g/l, et qui est rendue hydrophobe par traitement avec le PolyDiMéthylSiloxane. Les particules constitutives de l'AEROSIL^{®} R202 ont une taille d'environ 16 nm.

### Catalyseur de réticulation (D) :

Le catalyseur de réticulation (D) utilisable dans la composition selon l'invention peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR^{®} AA75 auprès de la société DuPont), de l'aluminium comme le chélate d'aluminium (disponible commercialement sous la dénomination K-KAT^{®} 5218 auprès de la société King Industries), des amines comme le 1,8-diazobicyclo (5.4.0) undécène-7 ou DBU.

### Résine silsesquioxane (E) :

Outre les ingrédients (A), (B), (C) et (D), la composition adhésive réticulable selon l'invention comprend également une résine silsesquioxane (E).

Selon une variante préférée de l'invention, la composition adhésive réticulable selon l'invention comprend au moins une telle résine silsesquioxane.

Les résines silsesquioxanes sont des composés organiques de silicium pouvant adopter une structure polyhédrique ou une structure polymérique, avec des liaisons Si-O-Si. Ils ont généralement la formule générale suivante :

[RSiO_{3/2}]t

dans laquelle R, de nature identique ou différente, représente un radical organique, et t est un nombre entier pouvant varier de 6 à 12, de préférence t égale 6, 8, 10 ou 12.

Selon un mode de réalisation, le silsesquioxane (E) a une structure polyhédrique (ou POSS pour « Polyhedral Oligomeric Silsesquioxane » en anglais).

De préférence, le silsesquioxane (E) répond à la formule générale (V) suivante : 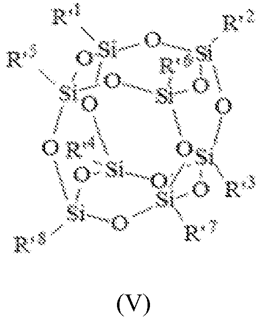 dans laquelle chacun de R'¹ à R'⁸ représente, indépendamment les uns des autres, un groupe choisi parmi :
- un atome d'hydrogène,
- un radical choisi parmi le groupe constitué d'un radical alcoxy linéaire ou ramifié en C1-C4, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe -OSiR'⁹R'¹⁰ dans lequel R'⁹ et R'¹⁰ représente chacun, indépendamment l'un de l'autre, un atome d'hydrogène ou un radical choisi dans le groupe constitué des alkyles linéaires ou ramifiés en C1-C4, des alcoxys linéaires ou ramifiés en C1-C4, des alcényles en C2-C4, d'un phényle, d'un radical allyle en C3-C6, d'un radical aliphatique cyclique en C3-C8, et d'un radical acyle en C1-C4 ;
à condition :
- qu'au moins un radical parmi les radicaux R'¹ à R'⁸ soit un radical alcoxy en C1-C4; et
- qu'au moins un radical parmi les radicaux R'¹ à R'⁸ soit un radical phényle.

En particulier, le silsesquioxane (E) est un diméthylméthoxyphényl siloxane (numéro CAS = 68957-04-0).

Les silsesquioxanes sont des composés connus qui sont décrits notamment dans la demande WO 2008/107331. Certains sont également disponibles au plan commercial, ainsi le produit de DOW commercialisé sous la dénomination : DOW CORNING^{®} 3074 et DOW CORNING^{®} 3037 (numéro CAS = 68957-04-0).

### Autres additifs :

La composition adhésive réticulable selon l'invention peut également comprendre un ou plusieurs additifs choisis dans le groupe constitué des absorbeurs d'humidité, des plastifiants, des antioxydants, des pigments, des colorants, des promoteurs d'adhérence, des stabilisants UV, des additifs ignifuges ou encore des charges telles que des charges carbonatées, par exemple de type carbonate de calcium.

L'absorbeur d'humidité (ou agent dessicant) peut être par exemple choisi parmi les dérivés alkoxysilane hydrolysables, non polymériques, de masse moléculaire inférieure à 500 g/mol, de préférence choisi parmi les dérivés de triméthoxysilane et de triéthoxysilane. Un tel agent peut typiquement prolonger la durée de conservation de la composition durant le stockage et le transport avant son utilisation. On peut par exemple citer le gamma-métacryloxypropyltriméthoxysilane (par exemple disponible sous la dénomination commerciale SILQUEST ^{®} A-174 auprès de la société MOMENTIVE), le méthacryloxyméthyltriméthoxysilane (par exemple disponible sous la dénomination GENIOSIL ^{®} XL33 auprès de WACKER), le vinyltriméthoxysilane, l'isooctyltriméthoxysilane, ou le phényltriméthoxysilane.

Lorsqu'il est présent, l'absorbeur d'humidité peut par exemple représenter de 0,1% à 3% en poids ou de 1% à 2% en poids par rapport au poids total de la composition selon l'invention.

La composition selon l'invention peut également comprendre un agent plastifiant.

A titre d'exemple d'agent plastifiant utilisable, on peut utiliser n'importe quel agent plastifiant habituellement utilisé dans le domaine des adhésifs, tel que par exemples les phtalates, les benzoates, les esters de trimethylolpropane, les esters de triméthyloléthane, les esters de triméthylolméthane, les esters de glycérol, les esters de pentaerythritol, les huiles minérales napthéniques, les adipates, les cyclohexanedicarboxylates, les huiles paraffiniques, les huiles naturelles (éventuellement époxydées), les polypropylènes, les polybutylènes, les polyisoprènes hydrogénés, et leurs mélanges.

Parmi les phtalates, on peut par exemple citer le diisononyl phtalate, le di-isobutyl phtalate, le dioctyle phtalate, le dicyclohexyl phtalate, le diisooctyle phtalate, le diisododécyle phtalate, le dibenzyle phtalate ou le butylbenzyle phtalate.

Parmi les benzoates, on peut par exemple citer : le néopentylglycol dibenzoate (par exemple disponible sous la dénomination UNIPLEX ^{®} 512 auprès de LANXESS), le dipropylèneglycol dibenzoate (par exemple disponible sous la dénomination BENZOFLEX ^{®} 9-88SG auprès de EASTMAN), un mélange de diéthylène glycol dibenzoate et de dipropylène glycol dibenzoate (par exemple disponible sous la dénomination K-FLEX ^{®} 850 S auprès de KALAMA CHEMICAL), ou encore un mélange de diéthylène glycol dibenzoate, de dipropylène glycol dibenzoate et de triéthylène glycol dibenzoate (par exemple disponible sous la dénomination BENZOFLEX ^{®} 2088 auprès de EASTMAN).

Parmi les esters de pentaérythritol, on peut par exemple citer le tétravalérate de pentaérythritol (par exemple disponible sous la dénomination PEVALEN^{™} auprès de la société PESTORP).

Parmi les cyclohexanedicarboxylates, on peut par exemple citer le diisononyl 1,2-cyclohexanedicarboxylate (par exemple disponible sous la dénomination HEXAMOLL DINCH ^{®} auprès de BASF) ) et le 1,4-bis(2-ethylhexyl)-1,4-cyclohexanedicarboxylate (par exemple disponible sous la dénomination DEHCH auprès de CONNECT CHEMICALS).

La teneur totale en plastifiant(s) dans la composition selon l'invention peut aller de 0% à 30% en poids, de préférence de 1% à 30% en poids, voire par exemple de 1% à 15% en poids par rapport au poids total de ladite composition.

La composition selon l'invention peut également comprendre un antioxydant (désigné également par le terme d'agent stabilisant UV).

Les antioxydants sont des composés qui peuvent être introduits pour protéger la composition d'une dégradation résultant d'une réaction avec de l'oxygène qui est susceptible de se former par action de la chaleur ou de la lumière. Ces composés peuvent inclure des antioxydants primaires qui piègent les radicaux libres. Les antioxydants primaires peuvent être utilisés seuls ou en combinaison avec d'autres antioxydants secondaires ou des stabilisants UV.

On peut par exemple citer l'IRGANOX ^{®} 1010, l'IRGANOX ^{®} B561, l'IRGANOX ^{®} 245, l'IRGANOX ^{®} 1076, l'IRGAFOS ^{®} 168 commercialisés par BASF.

Une quantité d'antioxydant allant de 0,1% à 3%, de préférence de 1% à 3% en poids, sur la base du poids total de la composition selon l'invention est généralement utilisée.

Selon un mode de réalisation, la composition adhésive réticulable selon l'invention comprend :
- de 3% à 90% en poids, de préférence de 5% à 80% en poids, préférentiellement de 10% à 70% en poids, en particulier de 20% à 60% en poids, avantageusement de 36% à 56% en poids d'au moins un polymère (A) comprenant un groupe alkoxysilane hydrolysable ;
- de 8% à 80% en poids, notamment de 15% à 80% en poids, de préférence de 20% à 70%, préférentiellement de 25% à 70%, en particulier de 30% à 60%, avantageusement de 40% à 60% en poids d'au moins une résine tackifiante (B) ;
- de 1% à 10 % en poids, de préférence de 2% à 8 %, avantageusement de 2% à 6 % en poids de la silice pyrogénée (C) ; et
- de 0,01% à 10% en poids, de préférence de 0,01% à 5%, préférentiellement de 0,05% à 4%, avantageusement de 0,1% à 3%, en particulier de 0,5% à 2% en poids de catalyseur de réticulation (D) ;
ces pourcentages en poids étant indiqués sur la base du poids total de ladite composition.

Lorsque, selon une variante préférée de l'invention, la composition adhésive réticulable comprend en outre une résine silsesquioxane (E), la quantité de celle-ci peut varier de 0,1 à 20% en poids, de préférence de 1% à 20% en poids, préférentiellement de 2% à 15% en poids, avantageusement de 3% à 12% en poids, sur la base du poids total de ladite composition.

La composition adhésive réticulable selon l'invention peut être préparée par un procédé qui comprend :
- une étape de mélange, à l'abri de l'air, de préférence sous atmosphère inerte, du polymère (A), de la résine tackifiante (B), et, le cas échéant des autres additifs optionnels, pour former une partie (PA) ; puis
- une étape de mélange du catalyseur de réticulation (D) avec, lorsqu'elle est présente, la résine silsesquioxane (E) ; pour former une partie (PB) ; puis
- une étape d'incorporation de la silice pyrogénée (C) dans la partie (PA), à une température comprise entre 50 et 180°C, de préférence entre 100 et 150°C, jusqu'à l'obtention d'un mélange homogène (PC) ; et enfin
- une étape de mélange de (PC) avec (PB).

### Article auto-adhésif :

La présente invention a également pour objet un article auto-adhésif comprenant une couche support revêtue d'une couche auto-adhésive, caractérisé en ce que ladite couche auto-adhésive est constituée de la composition adhésive selon l'invention à l'état réticulé.

Au sens de la présente invention, le terme « article auto-adhésif » inclut tout article qui peut être collé sur une surface seulement par l'action d'une pression avec la main ou un équipement, sans l'utilisation de colles ou adhésifs supplémentaires.

L'article auto-adhésif est un article auto-adhésif sensible à la pression.

La couche support revêtue d'une couche auto-adhésive est également désignée par les termes de "support auto-adhésif".

Ces articles ont notamment pour but d'être appliqués sur une surface à coller afin de rapprocher, de maintenir, de fixer, d'assembler ou simplement d'immobiliser, d'exposer des formes, logos, images ou informations. Ces articles peuvent être utilisés dans de nombreux domaines, tels que le domaine médical, l'habillement, l'emballage, l'automobile (par exemple pour la pose de logos, le lettrage, l'insonorisation intérieure, l'habillage intérieur, les collages dans l'habitacle) ou la construction (par exemple pour l'isolation phonique et thermique, l'assemblage de fenêtres). Ils peuvent être façonnés en fonction de leur application finale, par exemple sous la forme de rubans, tels que les rubans à usage industriel, les rubans de bricolage ou à usage de fixation sur chantiers, les rubans simples ou double face, ou sous la forme d'étiquettes, de bandages, de pansements, de patchs ou de films graphiques.

Selon un mode de réalisation, l'article auto-adhésif est un système multicouche auto-adhésif, et en particulier une étiquette ou un ruban auto-adhésif, pouvant être à simple ou double face.

Le matériau utilisable pour la couche support peut par exemple être tout type de support rigide ou souple. On peut par exemple citer les supports de type mousses, feutrines, supports non tissés, plastiques, membranes, les papiers ou un film d'un matériau polymère à une ou plusieurs couches, notamment un papier ou film plastique protecteur anti-adhérent.

La couche support est en matériau par exemple choisi parmi les polyoléfines, telles que le polyéthylène, dont le polyéthylène haute densité, le polyéthylène faible densité, le polyéthylène faible densité linéaire et le polyéthylène ultra faible densité linéaire, le polypropylène et les polybutylènes ; le polystyrène ; le caoutchouc naturel ou synthétique ; les copolymères vinyliques, tels que le polychlorure de vinyle, plastifié ou non plastifié, et les poly(acétate de vinyle) ; les copolymères oléfiniques, tels que les copolymères éthylène/méthacrylate, les copolymères éthylène/acétate de vinyle, les copolymères acrylonitrile/butadiène/styrène, et les copolymères éthylène/propylène ; les polymères et les copolymères acryliques ; les polyuréthanes ; les polyéthers ; les polyesters ; et les mélanges de ceux-ci. De préférence, la couche support est à base de polymères acryliques, de Polyéthylène (PE), Polypropylène (PP) orienté, non orienté ou bi-orienté, Polyimide, Polyuréthane, Polyester tel que le Polyéthylène téréphtalate (PET), ou de papier.

Selon un mode de réalisation, l'article auto-adhésif obtenu à partir de la composition adhésive selon l'invention comprend une couche support permanente revêtue d'une couche adhésive. De préférence, la couche adhésive est en outre revêtue d'un film plastique ou papier protecteur anti-adhérent, de préférence siliconé.

Selon un autre mode de réalisation, l'article auto-adhésif obtenu à partir de la composition adhésive selon l'invention comprend une couche support non permanente qui est constituée d'un premier film plastique ou papier protecteur anti-adhérent, de préférence siliconé, ladite couche étant revêtue d'une couche adhésive, elle-même pouvant également être revêtue d'un second film plastique ou papier protecteur anti-adhérent. Ce mode de réalisation est particulièrement adapté à l'assemblage par collage de fenêtres, plus particulièrement à l'assemblage du panneau rigide constitué du double ou triple vitrage avec le châssis de la fenêtre. Selon ce mode de réalisation, ladite couche support non permanente est destinée à être enlevée par l'utilisateur au moment de la mise en œuvre de l'article auto-adhésif en vue de l'assemblage de la fenêtre, de manière à faire apparaître la seule couche adhésive réticulée, dont les propriétés mécaniques, notamment de résistance à la rupture, sont, conformément à l'invention, particulièrement améliorées.

A titre d'alternative au film protecteur anti-adhérent, la face arrière de la couche support permanente qui n'est pas revêtue de la couche adhésive, peut avoir une surface anti-adhérente, par exemple une couche protectrice siliconée.

Selon un autre mode de réalisation, la couche support permanente est revêtue sur ses deux faces par une composition adhésive, qui peut être identique ou différente, au moins une des deux compositions adhésives étant selon l'invention, conduisant avantageusement à la fabrication de rubans dits double face

De préférence, la couche support présente une épaisseur allant de 10 micromètres à 50 mm, de préférence encore allant de 10 micromètres à 20 mm, de préférence allant de 20 micromètres à 10 mm, de préférence encore allant de 20 micromètres à 1 mm.

Dans certains cas spécifiques, il est nécessaire de procéder à un traitement de surface de la couche support pour augmenter l'accroche de la couche adhésive lors de l'étape d'enduction sur celle-ci.

L'article auto-adhésif selon l'invention peut ainsi coller deux substrats. Le substrat sur lequel l'article auto-adhésif est destiné à être appliqué (désigné par « substrat à coller ») peut être flexible ou rigide. En particulier, il peut présenter les mêmes propriétés de flexibilité que la couche support décrite ci-dessus, de manière à être enroulé et conditionné sous la forme d'une bobine, par exemple telle que décrite précédemment.

Alternativement, le substrat à coller peut être rigide. Dans ce cas, le substrat ne peut être enroulé et conditionné sous la forme d'une bobine, par exemple telle que décrite précédemment. Le substrat à coller peut par exemple être choisi parmi le béton, le papier, les substrats de type polyoléfines, le verre, la céramique et les métaux, notamment l'aluminium.

La couche auto-adhésive, qui est constituée de la composition adhésive selon l'invention à l'état réticulé, et qui recouvre la couche support, dans l'article auto-adhésif selon l'invention peut avoir une épaisseur très variable, allant de 10 µm à 5000 µm, de préférence.

Une épaisseur allant de 10 µm à 100 µm, de préférence de 20 µm à 50 µm est plus particulièrement préférée dans le cas des étiquettes auto-adhésives ; tandis qu'une épaisseur allant dans un domaine beaucoup plus large de de 3 µm à 5000 µm peut être rencontrée pour les rubans auto-adhésifs.

Selon un mode de réalisation, l'article auto-adhésif comprend en outre une couche anti-adhérente protectrice (« release liner » en anglais).

Selon un mode de réalisation, ladite couche anti-adhérente est appliquée sur la couche adhésive, après réticulation de la composition adhésive.

La couche support peut être recouverte sur celle de ses deux faces qui n'est pas revêtue de la couche adhésive, par une couche protectrice anti-adhérente, par exemple par un film siliconé. De cette façon, l'article auto-adhésif peut être enroulé sur lui-même puis déroulé sans problème grâce à l'absence d'adhésion de la couche adhésive sur la face siliconée.

### Procédé de fabrication de l'article auto-adhésif :

La présente invention a également pour objet un procédé de fabrication de l'article auto-adhésif tel que défini précédemment, ledit procédé étant caractérisé en ce qu'il comprend:
- (a) l'application de ladite composition par enduction sur une surface porteuse ;
- (b) la réticulation de ladite composition, par chauffage à une température allant de 15°C à 200°C ; puis
- (c) le contre collage ou le transfert de la couche de composition adhésive réticulée sur une couche support ou sur un film protecteur anti-adhérent.

Par « surface porteuse » au sens de la présente invention, il faut comprendre soit un convoyeur à bande recouvert d'une couche anti-adhérente, soit un film protecteur anti-adhérent (« release liner » en anglais), soit une couche support.

Dans le cas où la surface porteuse est un film protecteur anti-adhérent, le procédé de fabrication de l'article auto-adhésif selon l'invention peut comprendre l'étape (c) de transfert de la couche adhésive réticulée sur une couche support.

Dans le cas où la surface porteuse est une couche support ou un film protecteur anti-adhérent, le procédé de fabrication de l'article auto-adhésif selon l'invention peut encore comprendre l'étape (c) de contre collage de la couche adhésive sur un film protecteur anti-adhérent.

Selon une variante préférée de l'invention, l'étape (c) du procédé sus-décrit consiste en un transfert de la couche adhésive réticulée sur une couche support souple (pouvant être un film plastique), le cas échéant après refroidissement de la couche adhésive réticulée à une température inférieure à la température de dégradation ou de ramollissement du matériau composant la couche support.

Selon un mode de réalisation, le procédé de fabrication de l'article auto-adhésif selon l'invention comprend en outre une étape (d) d'enduction d'une seconde couche de composition adhésive selon l'invention sur la couche support, suivie d'une étape (e) de réticulation de la composition adhésive enduite à l'étape (d) par chauffage à une température allant de 15°C à 200°C, de préférence de 15°C à 45°C, de préférence à température ambiante, en particulier entre 18°C et 25°C, notamment à 23°C. Selon ce mode de réalisation, un article auto-adhésif double face est obtenu.

L'étape (a) d'enduction peut être réalisée au moyen de dispositifs d'enduction connus, comme par exemple une buse à lèvre ou de type rideau, ou encore au rouleau. Elle met en œuvre un grammage de composition adhésive pouvant aller de 3 g/m² à 5000 g/m², en particulier de 10 g/m² à 5000g/m².

Le grammage de composition adhésive nécessaire pour la fabrication d'étiquettes auto-adhésives peut aller de 10 g/m² à 100 g/m², de préférence de 20 g/m² à 50 g/m². Celui nécessaire pour la fabrication de rubans auto-adhésifs peut varier dans un domaine beaucoup plus large allant de 3 g/m² à 5000 g/m², de préférence de 15 g/m² à 250 g/m² par face.

L'étape (b) de réticulation est, selon une variante préférée de l'invention, mise en œuvre à une température allant de 15°C à 45°C, de préférence à température ambiante, en particulier entre 18°C et 25°C, notamment à 23°C.

Selon un mode de réalisation, la composition adhésive enduite est en outre soumise, lors de l'étape (b) de réticulation à un traitement dans une atmosphère humide caractérisée par son niveau d'humidité et, en particulier, dans un environnement gazeux où des molécules d'eau sont présentes entre 10 et 200 g par m³ de gaz.

De préférence, l'atmosphère humide est une atmosphère dans laquelle de 2 à 100% des molécules sont des molécules d'eau, de préférence de 3 à 50%, de préférence encore de 3 à 10% des molécules sont des molécules d'eau.

Le taux d'humidité est exprimé en pourcentage d'eau par unité de volume, ce qui correspond au nombre de molécules d'eau divisé par le nombre total de molécules dans une unité de volume. Grâce à la nature linéaire de cette échelle, le taux d'humidité est facilement mesuré et contrôlé en utilisant par exemple des moniteurs de type P.I.D (« Proportional-Integral-Derivative »). Le pourcentage en poids peut être calculé en multipliant le pourcentage du nombre de molécules d'eau par rapport au nombre total de molécules par un facteur de 0,622. Des informations générales sur le taux d'humidité dans divers environnements sont décrites par W. Wagner et al., dans "International Steam Tables - Properties of Water and Steam based on the Industrial Formulation IAPWS-IF97*".*

L'étape (b) de réticulation est, selon encore une variante préférée de l'invention, mise en œuvre sans contrôle de l'humidité, tout particulièrement à l'humidité de l'atmosphère ambiante, en particulier à une humidité absolue de 20 à 60 g d'eau par m³ d'air, de préférence de 40 à 60 g/m³.

Cette étape (b) de réticulation a notamment pour effet la création - entre les chaînes polymériques à groupe terminal alkoxysilane hydrolysable de la composition adhésive et sous l'action de l'humidité atmosphérique - de liaisons de type siloxane qui conduisent à la formation d'un réseau polymérique tri-dimensionnel. La composition adhésive ainsi réticulée est en particulier un adhésif sensible à la pression qui confère à la couche support qui en est revêtue le pouvoir adhésif et le tack désirables.

De préférence, l'enduction est réalisée uniformément sur la couche support ou sur la couche protectrice anti-adhérente mais l'enduction peut également être adaptée à la forme souhaitée de l'article auto-adhésif final.

Selon un mode de réalisation, l'enduction par la composition adhésive est réalisée sur au moins une partie des deux faces de la couche support. Si les deux faces de la couche support sont enduites, la composition adhésive peut être identique ou différente sur les deux faces, et le grammage peut être identique ou différent sur les deux faces.

Selon un mode de réalisation de l'invention, l'article auto-adhésif comprend une couche adhésive sur au moins une partie d'une face ou sur au moins une partie des deux faces de la couche support, ladite ou lesdites couches adhésives étant éventuellement revêtues d'une couche protectrice anti-adhérente. Selon un mode de réalisation, l'article auto-adhésif comprend deux couches protectrices anti-adhérentes sur chacune des deux couches adhésives. Dans ce cas, les deux couches protectrices peuvent être en matériaux identiques ou différents et/ou elles peuvent avoir une épaisseur identique ou différente.

La présente invention a enfin pour objet une méthode de collage mettant en œuvre l'article auto-adhésif, tel que défini précédemment, caractérisée en ce qu'elle comprend les étapes suivantes :
a) le retrait de la couche protectrice anti-adhérente, lorsqu'une telle couche est présente ;
b) l'application de l'article auto-adhésif sur une surface d'un produit; et
c) l'application d'une pression sur ledit article.

A l'étape b), l'article auto-adhésif est appliqué de manière à ce que la partie auto-adhésive de l'article (formée par la couche auto-adhésive) soit face à la surface du produit.

Selon un mode de réalisation dans lequel l'article auto-adhésif est un article double face, la méthode de collage comprend en outre une étape dans laquelle soit une seconde surface d'un produit est appliquée sur l'article collé sur la première surface d'un produit, soit l'article collé sur la première surface d'un produit est appliqué sur une seconde surface d'un produit.

Les exemples suivants sont donnés à titre purement illustratif de l'invention et ne sauraient être interprétés pour en limiter la portée.

### Exemple A (comparatif selon le WO 2020/128200) :

### Composition adhésive réticulable par chauffage à base du GENIOSIL^{®} STP-E30

### A1. Préparation de la composition :

La composition figurant dans le tableau 1 est préparée en introduisant tout d'abord la résine tackifiante Picco^{®} AR100 dans un réacteur en verre sous vide et chauffé à environ 160°C. Puis, une fois la résine bien fondue, le GENIOSIL^{®} STP-E30 est ajouté.

Le mélange est agité sous vide durant 15 minutes, puis refroidi à 70°C. Le catalyseur (K-KAT^{®} 5218) et le silsesquioxane DOW CORNING^{®} 3074 sont alors introduits. Le mélange est maintenu sous vide et sous agitation durant 10 minutes supplémentaires.

### A2. Mesure du temps de réticulation à température ambiante :

La composition de l'exemple A est appliquée de manière à remplir un moule correspondant à une éprouvette de type H2, telle que définie par la norme NF T46-002, dont l'épaisseur est de 4 mm et dont la partie centrale présente une section rectangulaire de 4 x 2 mm sur une longueur de 25 mm.

Ledit moule est laissé à température ambiante (environ 23°C) et l'on observe le comportement de la composition. Le temps nécessaire à la réticulation totale est de 24 H.

### A3. Mesure de la contrainte et de l'allongement à la rupture par essai de traction :

Le principe de la mesure consiste à étirer dans une machine de traction, dont la mâchoire mobile se déplace à une vitesse constante égale à 100 mm/minute, une éprouvette de type H2, telle que définie ci-dessus, constituée de la composition adhésive réticulée et à enregistrer, au moment où se produit la rupture de l'éprouvette, la contrainte appliquée (en MPa) ainsi que l'allongement de l'éprouvette ou élongation (en %).

Les résultats des mesures obtenues sont indiqués dans le tableau 1.

### A4. Préparation d'une couche support PET revêtue de la composition réticulée, à raison d'un grammage égal à 60 g/m² :

On utilise comme couche support une feuille rectangulaire de PolyEthylèneTéréphtalate (PET) d'épaisseur 50 µm et de dimensions 20 cm sur 40 cm.

On préchauffe la composition obtenue au point A1. à une température proche de 100°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 60 g/m², ce qui représente environ une épaisseur de l'ordre de 60 µm.

La feuille de PET ainsi enduite est alors placée dans une étuve à 120 °C et sous atmosphère humide (4% d'humidité relative) durant 5 minutes pour réticulation de la composition, puis contrecollée sur une couche anti-adhérente protectrice consistant en une feuille de film siliconé, rectangulaire et de mêmes dimensions.

Le tricouche obtenu est soumis aux tests décrits ci-dessous.

### A4.1 Pelage à température ambiante :

Le pouvoir adhésif est évalué par le test de pelage (ou peel) à 180° sur plaque d'acier inoxydable tel que décrit dans la méthode FINAT n° 1, publiée dans le Manuel Technique FINAT 6^{ème} édition, 2001. FINAT est la fédération internationale des fabricants et transformateurs d'étiquettes auto-adhésives. Le principe de ce test est le suivant.

Une éprouvette sous la forme d'une bande rectangulaire (2,54 cm x 15 cm) est découpée dans le tricouche obtenu précédemment.

Cette éprouvette est conservée à température sous atmosphère ambiantes (environ 23°C et 50 % d'humidité) durant 7 heures. Puis, après enlèvement de la portion de couche anti-adhérente protectrice correspondante, elle est fixée sur les 2/3 de sa longueur sur un substrat constitué d'une plaque d'acier inoxydable.

L'assemblage obtenu est laissé 20 minutes à température ambiante (environ 23°C). Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

Le résultat correspondant est exprimé en N/2,54 cm et indiqué dans le tableau 1.

### A4.2 Pelage après 7 jours de stockage à 50°C:

On répète le test précédent, excepté qu'après découpe de l'éprouvette sous la forme de bande rectangulaire, celle-ci est stockée durant 7 jours à une température de 50°C et dans une atmosphère à 50 % d'humidité, avant d'être fixée sur la plaque d'acier inoxydable.

Le résultat correspondant est exprimé en N/2,54 cm et indiqué dans le tableau 1.

### A4.3 Adhésion instantanée (également dénommé test de la boucle) :

Le pouvoir collant immédiat ou tack est évalué par le test d'adhésion instantanée dit de la boucle, décrit dans la méthode FINAT n° 9, dont le principe est le suivant.

Une éprouvette sous forme de bande rectangulaire (25 mm x 175 mm) est découpée dans la couche support PET revêtu de la composition réticulée obtenue précédemment.

Après enlèvement de la totalité de la couche anti-adhérente protectrice, les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque.

Le résultat est exprimés en N/(2,54 cm)² et est indiqué dans le tableau 1.

### A4.4 Temps de résistance au cisaillement à 125°C :

Le maintien à température élevée du pouvoir adhésif de la couche support PET obtenue précédemment est évalué par un test qui détermine le temps de résistance du joint adhésif au cisaillement statique à 125°C. Il est fait référence pour ce test à la méthode FINAT n° 8. Le principe est le suivant.

Une éprouvette sous forme de bande rectangulaire (25 mm x 75 mm) est découpée dans le tricouche obtenu précédemment et est conservée à température ambiante (23°C, 50% d'humidité) durant 24 heures.

Après enlèvement de la totalité de la couche anti-adhérente protectrice, une portion carrée de 25 mm de côté située à l'extrémité de la bande adhésive est fixée sur une plaque de verre.

La plaque d'essai ainsi obtenue est introduite, au moyen d'un support approprié, en position sensiblement verticale dans une étuve à 125°C, la partie non collée de la bande de longueur 50 mm se situant en dessous de la plaque. Après équilibrage thermique, la partie restée libre de la bande est reliée à une masse de 1 kg, l'ensemble du dispositif restant toujours durant la durée du test maintenu dans l'étuve à 125°C.

Sous l'effet de cette masse, le joint adhésif qui assure la fixation de la bande sur la plaque est soumis à une contrainte de cisaillement. Pour mieux contrôler cette contrainte, la plaque d'essai est en fait placée de sorte à faire un angle de 2° par rapport à la verticale.

On note le temps au bout duquel la bande se décroche de la plaque à la suite de la rupture du joint de colle sous l'effet de cette contrainte.

Le résultat, exprimé en heures, est indiqué dans le tableau 1.

### A4. 5 Temps de résistance au cisaillement à 125°C après 7 jours de stockage de l'éprouvette à 50°C :

On répète le test précédent, excepté qu'après découpe de l'éprouvette sous la forme de bande rectangulaire, celle-ci est stockée durant 7 jours à une température de 50°C et dans une atmosphère à 50 % d'humidité, avant d'être fixée sur la plaque de verre.

Le résultat, exprimé en heures, est indiqué dans le tableau 1.

### Exemples B et C : Compositions adhésives à base du GENIOSIL^{®} STP-E30 comparatives

On répète la préparation de la composition de l'exemple A telle qu'indiquée au point A1, sauf que :
- pour l'exemple B : on n'introduit pas de silsesquioxane,
- pour l'exemple C : on n'introduit pas de silsesquioxane, et après ajout du catalyseur puis agitation de 10 minutes, on introduit l'AEROSIL^{®} R202, et l'on agite de nouveau durant environ 10 minutes.

On répète la mesure du temps de réticulation à température ambiante, ainsi que les essais de traction et de résistance au cisaillement à 125°C, comme indiqués au points A2, A3 et A4. On obtient les résultats indiqués dans le tableau 1.

### Exemples 1 et 2 selon l'invention : Compositions adhésives réticulables à température ambiante à base du GENIOSIL^{®} STP-E30

On répète la préparation de la composition de l'exemple A telle qu'indiquée au point A1, sauf que, après ajout du catalyseur et du silsesquioxane puis agitation de 10 minutes, on introduit l'AEROSIL^{®} R202, et l'on agite de nouveau durant environ 10 minutes.

On répète la mesure du temps de réticulation à température ambiante et l'essai de traction, comme indiqués au points A2 et A3. On obtient les résultats indiqués dans le tableau 1. On observe pour l'exemple 2 que le temps de réticulation à température ambiante est, par rapport à l'exemple B, considérablement diminué (de plus d'un facteur 2). En outre, on observe pour l'exemple 2 que la contrainte à la rupture est nettement augmentée par rapport à l'exemple B. Or, l'ajout séparé de résine silsesquioxane (E) ou de silice pyrogénée (C) conduit à une diminution de la contrainte à la rupture (exemples A et C). L'augmentation de la contrainte à la rupture observée pour l'ajout d'une combinaison de résine silsesquioxane (E) et de silice pyrogénée (C) est donc totalement inattendue et démontre une synergie entre ces ingrédients.

On répète également la préparation de la couche support auto-adhésive de PET, telle qu'indiquée au point A4., sauf que la feuille de PET enduite est laissée à température ambiante (environ 23°C) durant 7 H pour réticulation, avant d'être contrecollée sur la couche anti-adhérente protectrice. Le tricouche obtenu est ensuite soumis aux tests décrits aux points A4.1 à A4.5 qui conduisent aux résultats indiqués dans le tableau 1.

On observe pour les exemples 1 et 2 des résultats de peel (à température ambiante ou après stockage de 7 jours à 50°C) sensiblement identiques à ceux de l'exemple A.

Les valeurs d'adhésion instantanée (ou tack) obtenues pour ces 2 exemples sont, bien qu'inférieures à celles de l'exemple A, tout à fait appropriées à un support auto-adhésif.

Enfin, les résultats montrent que l'ajout de résine silsesquioxane (E) (exemple A) conduit à une amélioration de la résistance au cisaillement à 125°C (comparaison avec l'exemple B), tandis que l'ajout de de silice pyrogénée (C) (exemple C) n'a presque d'effet sur la résistance au cisaillement à 125°C. En revanche, les valeurs de résistance au cisaillement à 125°C mesurées pour les couches de PET auto-adhésives des exemples 1 et 2 démontrent une cohésion en température bien supérieure à celle des exemples A, B et C. Ainsi, l'ajout d'une combinaison de résine silsesquioxane (E) et de silice pyrogénée (C) permet d'améliorer de façon surprenante la résistance au cisaillement à 125°C, ces ingrédients agissant en synergie. En outre, les couches de PET auto-adhésives des exemples 1 et 2 conservent ces propriétés de résistance au cisaillement à 125°C même après stockage de 7 jours à 50°C.

**Tableau 1**

| Ingrédient | | Teneur en % poids/poids | | | | |
|---|---|---|---|---|---|---|
| | | Exemple A | Exemple B | Exemple C | Exemple 1 | Exemple 2 |
| (A) | GENIOSIL^{®} STP-E30 | 42,4 | 44,7 | 42,4 | 40,84 | 40,19 |
| (B) | Picco^{®} AR100 | 51,6 | 54,3 | 51,6 | 49,71 | 48,94 |
| (C) | AEROSIL^{®} R202 | - | - | 5 | 3,5 | 5,0 |
| (D) | K-KAT ^{®} 5218 | 1 | 1 | 1 | 0,98 | 0,98 |
| (E) | DOW CORNING^{®} 3074 | 5 | - | - | 4,97 | 4,89 |
| Temps de réticulation à température ambiante (heures) | | 24 | 18 | 5,67 | ND | 7 |
| Pelage à température ambiante (N/2,54 cm) | | 19 | ND | ND | 21 | 20 |
| Pelage après 7 jours à 50°C (N/2,54 cm) | | 22 | ND | ND | 21 | 20 |
| Adhésion instantanée (N/(2,54 cm)² ) | | 36 | ND | ND | 23 | 18 |
| Temps de résistance au cisaillement à 125°C (heures) | | 24 | 16 | 15,5 | 70 | 40 |
| Temps de résistance au cisaillement à 125°C après 7 jours à 50°C (heures) | | 25 | ND | ND | 70 | 42 |
| contrainte à la rupture (en MPa) | | 0,16 | 0,28 | 0,11 | ND | 0,39 |
| élongation à la rupture (en %) | | 326 | ND | ND | ND | 300 |

| | | | | | | |
|---|---|---|---|---|---|---|
| ND = Non Déterminé | | | | | | |

## Revendications

1. Article auto-adhésif comprenant une couche support revêtue d'une couche auto-adhésive, **caractérisé en ce que** ladite couche auto-adhésive est constituée d'une composition adhésive réticulable, à l'état réticulé, la composition adhésive réticulable étant **caractérisée en ce qu'**elle comprend :
- au moins un polymère (A) comprenant un groupe alkoxysilane hydrolysable ;
- au moins une résine tackifiante (B) ;
- au moins une silice pyrogénée (C) ;
- au moins un catalyseur de réticulation (D) ; et
- une résine silsesquioxane (E).

2. Article auto-adhésif selon la revendication 1, **caractérisé en ce que** le polymère (A) comprend au moins un, et de préférence au moins deux, groupements hydrolysables de formule (I) :
-Si(R⁴)ₚ(OR⁵)₃₋ₚ (I)
dans laquelle :
- R⁴ représente un radical alkyl linéaire ou ramifié comprenant de 1 à 4 atomes de carbone, avec la possibilité que quand il y a plusieurs radicaux R⁴, ces derniers soient identiques ou différents ;
- R⁵ représente un radical alkyl linéaire ou ramifié comprenant de 1 à 4 atomes de carbone, avec la possibilité que quand il y a plusieurs radicaux R⁵, ces derniers soient identiques ou différents, avec la possibilité que deux groupements OR⁵ puissent être engagés dans un même cycle ; et
- p est un nombre entier égal à 0, 1 ou 2, de préférence égal à 0 ou 1.

3. Article auto-adhésif selon la revendication 2, **caractérisé en ce que** le polymère (A) répond à l'une des formules (II), (III) ou (IV) : 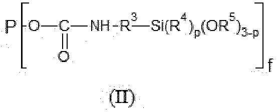 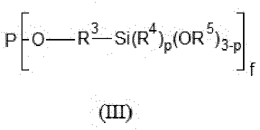 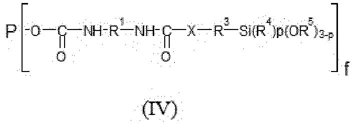 dans lesquelles :
- P représente un radical polymérique saturé ou insaturé, linéaire ou ramifié comprenant éventuellement un ou plusieurs hétéroatomes, tels que oxygène, azote, soufre, silicium, et présentant de préférence une masse molaire moyenne en nombre allant de 100 g/mol à 48600 g/mol, plus particulièrement de 300 g/mol à 18600 g/mol ou encore de 500 g/mol à 12600 g/mol,
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone, de préférence de 1 à 3 atomes de carbone,
- X représente un radical divalent choisi parmi -NH-, -NR⁷- ou -S-,
- R⁷ représente un radical alkyl linéaire ou ramifié comprenant de 1 à 20 atomes de carbone et pouvant également comprendre un ou plusieurs hétéroatomes, et
- f est un entier allant de 1 à 6, de préférence allant de 2 à 5, de préférence de 2 à 4, de préférence encore allant de 2 à 3.

4. Article auto-adhésif selon la revendication 3, **caractérisé en ce que** le polymère (A) répond à l'une des formules (II'), (III') ou (IV') : 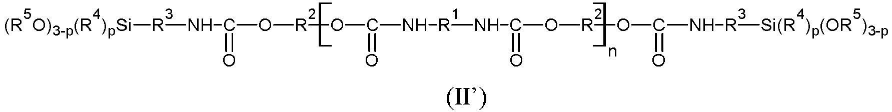 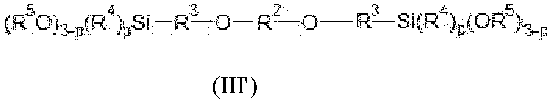 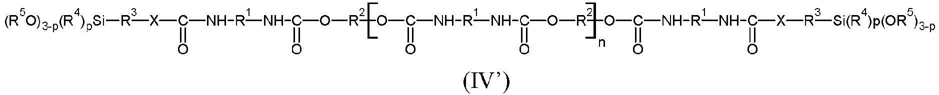 dans lesquelles :
- R² représente un radical divalent hydrocarboné saturé ou insaturé, linéaire ou ramifié comprenant éventuellement un ou plusieurs hétéroatomes, tels que oxygène, azote, soufre, silicium, et présentant de préférence une masse molaire moyenne en nombre allant de 100 g/mol à 48600 g/mol, plus particulièrement de 300 g/mol à 18600 g/mol ou encore de 500 g/mol à 12600 g/mol, et
- n est un entier supérieur ou égal à 0.

5. Article auto-adhésif selon l'une des revendications 1 à 4, **caractérisé en ce que** la résine tackifiante (B) est choisie parmi :
- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène, ledit procédé pouvant également comprendre une réaction avec des phénols ;
- (iii) les colophanes d'origine naturelle ou modifiées, (telles que par exemple la colophane extraite de la gomme de pins, la colophane de bois extraite des racines de l'arbre et leurs dérivés hydrogénés, dimérisés, polymérisés ou estérifiés par des monoalcools ou des polyols, comme le glycérol ou le pentaérythritol) ;
- (iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) les résines terpéniques, (qui résultent généralement de la polymérisation d'hydrocarbures terpéniques - comme par exemple le mono-terpène (ou pinène)- en présence de catalyseurs de Friedel-Crafts) ;
- (vi) les copolymères à base de terpènes naturels, (tels que, par exemple, le styrène/terpène, l'alpha-méthyl styrène/terpène et le vinyl toluène/terpène) ; ou bien
- (vii) les résines acryliques ayant une viscosité à 100°C inférieure à 100 Pa.s.

6. Article auto-adhésif selon l'une des revendications 1 à 5, **caractérisé en ce que** la silice pyrogénée (C) est hydrophobe.

7. Article auto-adhésif selon la revendication 6, **caractérisé en ce que** la silice pyrogénée hydrophobe (C) est obtenue par traitement d'une silice pyrogénée avec un PolyDiMéthylSiloxane.

8. Article auto-adhésif selon l'une des revendications 1 à 7, **caractérisé en ce que** la silice pyrogénée (C) possède une surface spécifique BET d'au moins 10 m²/g, de préférence allant de 50 à 400 m²/g.

9. Article auto-adhésif selon l'une des revendications 1 à 8, **caractérisé en ce que** la résine silsesquioxane (E) répond à la formule générale (V) suivante : 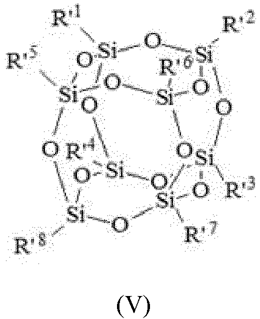 dans laquelle chacun de R'¹ à R'⁸ représente, indépendamment les uns des autres, un groupe choisi parmi :
- un atome d'hydrogène,
- un radical choisi parmi le groupe constitué d'un radical alcoxy linéaire ou ramifié en C1-C4, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe -OSiR'⁹R'¹⁰ dans lequel R'⁹ et R'¹⁰ représente chacun, indépendamment l'un de l'autre, un atome d'hydrogène ou un radical choisi dans le groupe constitué des alkyles linéaires ou ramifiés en C1-C4, des alcoxys linéaires ou ramifiés en C1-C4, des alcényles en C2-C4, d'un phényle, d'un radical allyle en C3-C6, d'un radical aliphatique cyclique en C3-C8, et d'un radical acyle en C1-C4 ;
à condition :
- qu'au moins un radical parmi les radicaux R'¹ à R'⁸ soit un radical alcoxy en C1-C4; et
- qu'au moins un radical parmi les radicaux R'¹ à R'⁸ soit un radical phényle.

10. Article auto-adhésif selon l'une des revendications 1 à 9, **caractérisé en ce que** la composition adhésive comprend :
- de 3% à 90% en poids d'au moins un polymère (A) ;
- de 8% à 80% en poids d'au moins une résine tackifiante (B) ;
- de 1% à 10 % en poids de la silice pyrogénée (C) ;
- de 0,01% à 10% en poids de catalyseur de réticulation (D) ; et
- de 0,1% à 20% en poids de résine silsesquioxane (E) ;
ces pourcentages en poids étant indiqués sur la base du poids total de ladite composition.

11. Procédé de fabrication de l'article auto-adhésif tel que défini dans l'une des revendications 1 à 10, **caractérisé en ce qu'**il comprend:
- (a) l'application de ladite composition par enduction sur une surface porteuse ;
- (b) la réticulation de ladite composition, par chauffage à une température allant de 15°C à 200°C ; puis
- (c) le contre collage ou le transfert de la couche de composition adhésive réticulée sur une couche support ou sur un film protecteur anti-adhérent.

12. Procédé de fabrication de l'article auto-adhésif selon la revendication 11, **caractérisé en ce que** l'étape (b) de réticulation est mise en œuvre à une température allant de 15°C à 45°C, de préférence à température ambiante, en particulier entre 18°C et 25°C, notamment à 23°C.

13. Méthode de collage mettant en œuvre l'article auto-adhésif, tel que défini dans l'une des revendications 1 à 10, **caractérisée en ce qu'**elle comprend les étapes suivantes :
a) le retrait de la couche protectrice anti-adhérente, lorsqu'une telle couche est présente ;
b) l'application de l'article auto-adhésif sur une surface d'un produit; et
c) l'application d'une pression sur ledit article.

## Patentansprüche

1. Selbstklebender Artikel, der eine mit einer selbstklebenden Schicht beschichtete Trägerschicht umfasst, **dadurch gekennzeichnet, dass** die selbstklebende Schicht aus einer vernetzbaren Klebstoffzusammensetzung im vernetzten Zustand besteht, wobei die vernetzbare Klebstoffzusammensetzung **dadurch gekennzeichnet ist, dass** sie Folgendes umfasst:
- mindestens ein Polymer (A), das eine hydrolysierbare Alkoxysilangruppe umfasst;
- mindestens ein klebrigmachendes Harz (B);
- mindestens eine pyrogene Kieselsäure (C);
- mindestens einen Vernetzungskatalysator (D) und
- ein Silsesquioxanharz (E).

2. Selbstklebender Artikel nach Anspruch 1, **dadurch gekennzeichnet, dass** das Polymer (A) mindestens eine und vorzugsweise mindestens zwei hydrolysierbare Gruppen der Formel (I) umfasst:
-Si(R⁴)ₚ(OR⁵)₃₋ₚ (I),
wobei:
- R⁴ für einen linearen oder verzweigten Alkylrest steht, der 1 bis 4 Kohlenstoffatome umfasst, wobei dann, wenn mehrere Reste R⁴ vorliegen, diese gleich oder verschieden sein können;
- R⁵ für einen linearen oder verzweigten Alkylrest steht, der 1 bis 4 Kohlenstoffatome umfasst, wobei dann, wenn mehrere Reste R⁵ vorliegen, diese gleich oder verschieden sein können, wobei sich zwei Gruppen OR⁵ im gleichen Ring befinden können; und
- p eine ganze Zahl gleich 0, 1 oder 2, vorzugsweise gleich 0 oder 1, ist.

3. Selbstklebender Artikel nach Anspruch 2, **dadurch gekennzeichnet, dass** das Polymer (A) einer der Formeln (II), (III) oder (IV): 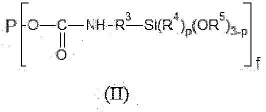 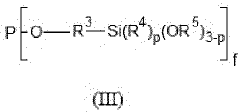 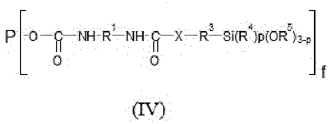 entspricht, wobei:
- P für einen gesättigten oder ungesättigten, linearen oder verzweigten polymeren Rest steht, der gegebenenfalls ein oder mehrere Heteroatome, wie Sauerstoff, Stickstoff, Schwefel, Silicium, umfasst und der vorzugsweise ein Zahlenmittel der Molmasse von 100 g/mol bis 48600 g/mol, noch spezieller von 300 g/mol bis 18600 g/mol oder auch von 500 g/mol bis 12600 g/mol, aufweist,
- R¹ für einen 5 bis 15 Kohlenstoffatome umfassenden zweiwertigen Kohlenwasserstoffrest steht, der aromatisch oder aliphatisch, linear, verzweigt oder cyclisch sein kann,
- R³ für einen 1 bis 6 Kohlenstoffatome, vorzugsweise 1 bis 3 Kohlenstoffatome, umfassenden linearen oder verzweigten zweiwertigen Alkylenrest steht,
- X für einen zweiwertigen Rest steht, der aus -NH-, - NR⁷- oder -S- ausgewählt ist,
- R⁷ für einen linearen oder verzweigten Alkylrest steht, der 1 bis 20 Kohlenstoffatome umfasst und auch ein oder mehrere Heteroatome umfassen kann, und
- f eine ganze Zahl von 1 bis 6, vorzugsweise von 2 bis 5, vorzugsweise von 2 bis 4, noch stärker bevorzugt von 2 bis 3, ist.

4. Selbstklebender Artikel nach Anspruch 3, **dadurch gekennzeichnet, dass** das Polymer (A) einer der Formeln (II'), (III') oder (IV'): 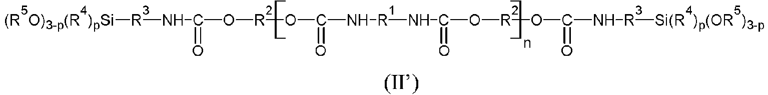 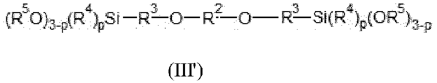 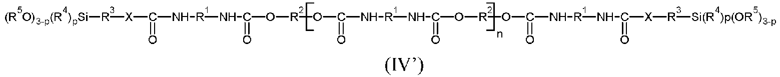 entspricht, wobei:
- R² für einen gesättigten oder ungesättigten, linearen oder verzweigten zweiwertigen Kohlenwasserstoff steht, der gegebenenfalls ein oder mehrere Heteroatome, wie Sauerstoff, Stickstoff, Schwefel, Silicium, umfasst und der vorzugsweise ein Zahlenmittel der Molmasse von 100 g/mol bis 48600 g/mol, noch spezieller von 300 g/mol bis 18600 g/mol oder auch von 500 g/mol bis 12600 g/mol, aufweist, und
- n eine ganze Zahl größer als oder gleich 0 ist.

5. Selbstklebender Artikel nach einem der Ansprüche 1 bis 4, **dadurch gekennzeichnet, dass** das klebrigmachende Harz (B) ausgewählt ist aus:
- (i) Harzen, die durch eine Polymerisation von Terpenkohlenwasserstoffen und Phenolen in Gegenwart von Friedel-Crafts-Katalysatoren erhalten werden;
- (ii) Harzen, die durch ein Verfahren erhalten werden, das die Polymerisation von alpha-Methylstyrol umfasst, wobei das Verfahren auch eine Reaktion mit Phenolen umfassen kann;
- (iii) Kolophonium natürlichen Ursprungs oder modifiziertem Kolophonium (wie beispielsweise aus Kiefernölharz extrahiertes Kolophonium, aus Baumwurzeln extrahiertes Wurzelharz und deren hydrierte, dimerisierte, polymerisierte oder mit Monoalkoholen oder Polyolen, wie Glycerin oder Pentaerythrit, veresterte Derivate);
- (iv) Harzen, die durch eine Hydrierung, Polymerisation oder Copolymerisation (mit einem aromatischen Kohlenwasserstoff) von Mischungen von aus Erdölfraktionen stammenden ungesättigten aliphatischen Kohlenwasserstoffen mit etwa 5, 9 oder 10 Kohlenstoffatomen erhalten werden;
- (v) Terpenharzen (die im Allgemeinen aus der Polymerisation von Terpenkohlenwasserstoffen, wie beispielsweise Monoterpen (oder Pinen), in Gegenwart von Friedel-Crafts-Katalysatoren resultieren);
- (vi) Copolymeren auf der Basis von natürlichen Terpenen (wie beispielsweise Styrol/Terpen, alpha-Methylstyrol/Terpen und Vinyltoluol/Terpen); oder
- (vii) Acrylharzen mit einer Viskosität bei 100 °C von weniger als 100 Pa.s.

6. Selbstklebender Artikel nach einem der Ansprüche 1 bis 5, **dadurch gekennzeichnet, dass** die pyrogene Kieselsäure (C) hydrophob ist.

7. Selbstklebender Artikel nach Anspruch 6, **dadurch gekennzeichnet, dass** die hydrophobe pyrogene Kieselsäure (C) durch die Behandlung einer pyrogenen Kieselsäure mit einem Polydimethylsiloxan erhalten wird.

8. Selbstklebender Artikel nach einem der Ansprüche 1 bis 7, **dadurch gekennzeichnet, dass** die pyrogene Kieselsäure (C) eine spezifische BET-Oberfläche von mindestens 10 m²/g, vorzugsweise von 50 bis 400 m²/g, aufweist.

9. Selbstklebender Artikel nach einem der Ansprüche 1 bis 8, **dadurch gekennzeichnet, dass** das Silsesquioxanharz (E) der folgenden allgemeinen Formel (V): 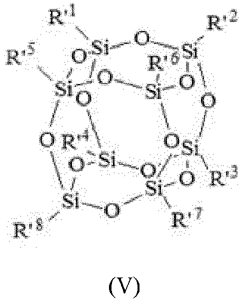 entspricht, wobei jeder von R'¹ bis R'⁸ unabhängig voneinander für eine Gruppe steht, die ausgewählt ist aus:
- einem Wasserstoffatom,
- einem Rest, der ausgewählt ist aus der Gruppe bestehend aus einem linearen oder verzweigten C1-C4-Alkoxyrest, einem linearen oder verzweigten Alkylrest, der 1 bis 30 Kohlenstoffatome umfasst, einem Alkenylrest, der 2 bis 30 Kohlenstoffatome umfasst, einem aromatischen Rest, der 6 bis 30 Kohlenstoffatome umfasst, einem Allylrest, der 3 bis 30 Kohlenstoffatome umfasst, einem aliphatischen cyclischen Rest, der 3 bis 30 Kohlenstoffatome umfasst, einem Acylrest, der 1 bis 30 Kohlenstoffatome umfasst, und
- einer Gruppe -OSiR'⁹R'¹⁰, wobei jeder R'⁹ und R'¹⁰ jeweils unabhängig voneinander für ein Wasserstoffatom oder einen Rest stehen, der ausgewählt ist aus der Gruppe bestehend aus linearen oder verzweigten C1-C4-Alkylen, linearen oder verzweigten C1-C4-Alkoxys, C2-C4-Alkenylen, einem Phenyl, einem C3-C6-Allylrest, einem cyclischen aliphatischen C3-C8-Rest und einem C1-C4-Acylrest;
unter der Bedingung:
- dass mindestens ein Rest der Reste R'¹ bis R'⁸ ein C1-C4-Alkoxyrest ist und
- dass mindestens ein Rest der Reste R'¹ bis R'⁸ ein Phenylrest ist.

10. Selbstklebender Artikel nach einem der Ansprüche 1 bis 9, **dadurch gekennzeichnet, dass** die Klebstoffzusammensetzung Folgendes umfasst:
- 3 Gew.-% bis 90 Gew.-% mindestens eines Polymers (A);
- 8 Gew.-% bis 80 Gew.-% mindestens eines klebrigmachenden Harzes (B);
- 1 Gew.-% bis 10 Gew.-% der pyrogenen Kieselsäure (C);
- 0,01 Gew.-% bis 10 Gew.-% Vernetzungskatalysator (D) und
- 0,1 Gew.-% bis 20 Gew.-% Silsesquioxanharz (E);
wobei diese Gewichtsprozente bezogen auf das Gesamtgewicht der Zusammensetzung angegeben sind.

11. Verfahren zur Herstellung eines selbstklebenden Artikels gemäß der Definition in einem der Ansprüche 1 bis 10, **dadurch gekennzeichnet, dass** es Folgendes umfasst:
- (a) das Auftragen der Zusammensetzung durch Beschichten einer tragenden Fläche;
- (b) das Vernetzen der Zusammensetzung durch Erwärmen auf eine Temperatur von 15 °C bis 200 °C, dann
- (c) das Laminieren oder Übertragen der Schicht aus vernetzter Klebstoffzusammensetzung auf eine Trägerschicht oder eine nichthaftende Schutzfolie.

12. Verfahren zur Herstellung eines selbstklebenden Artikels nach Anspruch 11, **dadurch gekennzeichnet, dass** der Vernetzungsschritt (b) bei einer Temperatur von 15 °C bis 45 °C, vorzugsweise bei Umgebungstemperatur, insbesondere zwischen 18 °C und 25 °C, im Besonderen bei 23 °C, durchgeführt wird.

13. Klebeverfahren unter Verwendung des selbstklebenden Artikels gemäß der Definition in einem der Ansprüche 1 bis 10, **dadurch gekennzeichnet, dass** es die folgenden Schritte umfasst:
a) das Entfernen der nichthaftenden Schutzschicht, wenn eine solche Schicht vorhanden ist;
b) das Aufbringen des selbstklebenden Artikels auf eine Fläche eines Produkts und
c) das Einwirkenlassen eines Drucks auf den Artikel.

## Claims

1. A self-adhesive article comprising a support layer coated with a self-adhesive layer, **characterized in that** said self-adhesive layer consists of a crosslinkable adhesive composition, in the crosslinked state, the crosslinkable adhesive composition being **characterized in that** it comprises:
- at least one polymer (A) comprising a hydrolyzable alkoxysilane group;
- at least one tackifying resin (B);
- at least one pyrogenic silica (C);
- at least one crosslinking catalyst (D); and
- a silsesquioxane resin (E).

2. The self-adhesive article as claimed in claim 1, **characterized in that** the polymer (A) comprises at least one, and preferably at least two, hydrolyzable groups of formula (I):
-Si(R⁴)ₚ(OR⁵)₃₋ₚ (I)
in which:
- R⁴ represents a linear or branched alkyl radical comprising from 1 to 4 carbon atoms, with the possibility that, when there are several R⁴ radicals, these radicals are identical or different;
- R⁵ represents a linear or branched alkyl radical comprising from 1 to 4 carbon atoms, with the possibility that, when there are several R⁵ radicals, these radicals are identical or different, with the possibility that two OR⁵ groups can participate in one and the same ring; and
- p is an integer equal to 0, 1 or 2, preferably equal to 0 or 1.

3. The self-adhesive article as claimed in claim 2, **characterized in that** the polymer (A) corresponds to one of the formulae (II), (III) or (IV): 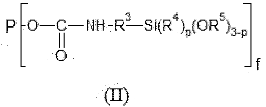 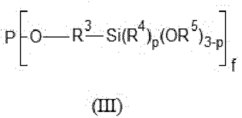 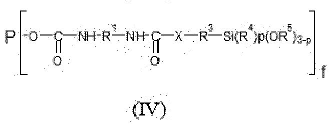 in which:
- P represents a saturated or unsaturated, linear or branched, polymeric radical optionally comprising one or more heteroatoms, such as oxygen, nitrogen, sulfur or silicon, and preferably exhibiting a number-average molar mass ranging from 100 g/mol to 48 600 g/mol, more particularly from 300 g/mol to 18 600 g/mol or also from 500 g/mol to 12 600 g/mol,
- R¹ represents a divalent hydrocarbon radical comprising from 5 to 15 carbon atoms which can be aromatic or aliphatic, linear, branched or cyclic,
- R³ represents a linear or branched divalent alkylene radical comprising from 1 to 6 carbon atoms, preferably from 1 to 3 carbon atoms,
- X represents a divalent radical chosen from -NH-, -NR⁷- or -S-,
- R⁷ represents a linear or branched alkyl radical comprising from 1 to 20 carbon atoms and which can also comprise one or more heteroatoms, and
- f is an integer ranging from 1 to 6, preferably ranging from 2 to 5, preferably ranging from 2 to 4, more preferably ranging from 2 to 3.

4. The self-adhesive article as claimed in claim 3, **characterized in that** the polymer (A) corresponds to one of the formulae (II'), (III') or (IV'): 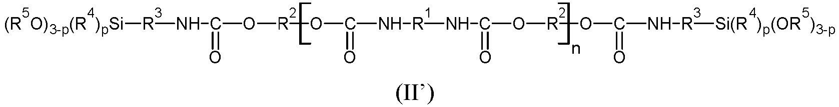 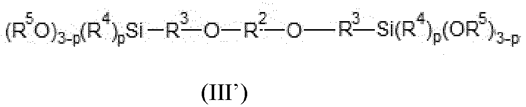 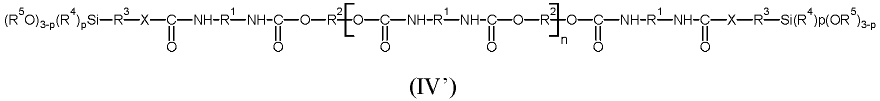 in which:
- R² represents a saturated or unsaturated, linear or branched, divalent hydrocarbon radical optionally comprising one or more heteroatoms, such as oxygen, nitrogen, sulfur or silicon, and preferably exhibiting a number-average molar mass ranging from 100 g/mol to 48 600 g/mol, more particularly from 300 g/mol to 18 600 g/mol or also from 500 g/mol to 12 600 g/mol, and
- n is an integer greater than or equal to 0.

5. The self-adhesive article as claimed in one of claims 1 to 4, **characterized in that** the tackifying resin (B) is chosen from:
- (i) resins obtained by polymerization of terpene hydrocarbons and of phenols, in the presence of Friedel-Crafts catalysts;
- (ii) resins obtained by a process comprising the polymerization of α-methylstyrene, it also being possible for said process to comprise a reaction with phenols;
- (iii) rosins of natural origin or modified rosins (such as, for example, the rosin extracted from pine gum, wood rosin extracted from tree roots and their derivatives which are hydrogenated, dimerized, polymerized or esterified with monoalcohols or polyols, such as glycerol or pentaerythritol);
- (iv) resins obtained by hydrogenation, polymerization or copolymerization (with an aromatic hydrocarbon) of mixtures of unsaturated aliphatic hydrocarbons having approximately 5, 9 or 10 carbon atoms resulting from petroleum fractions;
- (v) terpene resins (which generally result from the polymerization of terpene hydrocarbons, such as, for example, monoterpene (or pinene), in the presence of Friedel-Crafts catalysts);
- (vi) copolymers based on natural terpenes (such as, for example, styrene/terpene, α-methylstyrene/terpene and vinyltoluene/terpene); or else
- (vii) acrylic resins having a viscosity at 100°C of less than 100 Pa.s.

6. The self-adhesive article as claimed in one of claims 1 to 5, **characterized in that** the pyrogenic silica (C) is hydrophobic.

7. The self-adhesive article as claimed in claim 6, **characterized in that** the hydrophobic pyrogenic silica (C) is obtained by treatment of a pyrogenic silica with a polydimethylsiloxane.

8. The self-adhesive article as claimed in one of claims 1 to 7, **characterized in that** the pyrogenic silica (C) has a BET specific surface of at least 10 m²/g, preferably ranging from 50 to 400 m²/g.

9. The self-adhesive article as claimed in one of claims 1 to 8, **characterized in that** the silsesquioxane resin (E) corresponds to the following general formula (V): 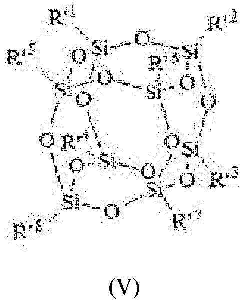 in which each of R'¹ to R'⁸ represents, independently of one another, a group chosen from:
- a hydrogen atom,
- a radical chosen from the group consisting of a linear or branched C₁-C₄ alkoxy radical, a linear or branched alkyl radical comprising from 1 to 30 carbon atoms, an alkenyl radical comprising from 2 to 30 carbon atoms, an aromatic radical comprising from 6 to 30 carbon atoms, an allyl radical comprising from 3 to 30 carbon atoms, a cyclic aliphatic radical comprising from 3 to 30 carbon atoms and an acyl radical comprising from 1 to 30 carbon atoms, and
- an -OSiR'⁹R'¹⁰ group in which R'⁹ and R'¹⁰ each represents, independently of each other, a hydrogen atom or a radical chosen from the group consisting of linear or branched C₁-C₄ alkyls, linear or branched C₁-C₄ alkoxys, C₂-C₄ alkenyls, a phenyl, a C₃-C₆ allyl radical, a cyclic C₃-C₈ aliphatic radical and a C₁-C₄ acyl radical;
provided:
- that at least one radical among the R'¹ to R'⁸ radicals is a C₁-C₄ alkoxy radical; and
- that at least one radical among the R'¹ to R'⁸ radicals is a phenyl radical.

10. The self-adhesive article as claimed in one of claims 1 to 9, **characterized in that** the adhesive composition comprises:
- from 3% to 90% by weight of at least one polymer (A);
- from 8% to 80% by weight of at least one tackifying resin (B);
- from 1% to 10% by weight of the pyrogenic silica (C);
- from 0.01% to 10% by weight of crosslinking catalyst (D); and
- from 0.1% to 20% by weight of silsesquioxane resin (E);
these percentages by weight being indicated on the basis of the total weight of said composition.

11. A process for the manufacture of the self-adhesive article as defined in one of claims 1 to 10, **characterized in that** it comprises:
- (a) the application of said composition by coating onto a carrying surface;
- (b) the crosslinking of said composition, by heating at a temperature ranging from 15°C to 200°C; and then
- (c) the lamination or the transfer of the layer of crosslinked adhesive composition onto a support layer or onto a nonstick protective film.

12. The process for the manufacture of the self-adhesive article as claimed in claim 11, **characterized in that** the crosslinking stage b) is carried out at a temperature ranging from 15°C to 45°C, preferably at ambient temperature, especially between 18°C and 25°C, in particular at 23°C.

13. An adhesive bonding method employing the self-adhesive article as defined in one of claims 1 to 10, **characterized in that** it comprises the following stages:
a) the removal of the nonstick protective layer, when such a layer is present;
b) the application of the self-adhesive article to a surface of a product; and
c) the application of a pressure to said article.
